# EUROPEAN PATENT SPECIFICATION

(11) **EP 3 637 975 B1**
(45) Date of publication and mention of the grant of the patent: **18.08.2021**
(21) Application number: 18730916.6
(22) Date of filing: 24.05.2018
(51) Int. Cl.: A01C 7/04, A01C 7/10, A01G 9/08, A01G 31/04

(54) **PRECISION SEEDER HEAD**
PRÄZISIONSSÄMASCHINENKOPF
TÊTES DE SEMOIR DE PRÉCISION

(30) Priority: 14.06.2017 US 201762519352 P; 22.05.2018 US 201815986185
(43) Date of publication of application: 22.04.2020
(73) Proprietor: Grow Solutions Tech LLC, Vineyard, Utah 84059 (US)
(72) Inventor: MILLAR, Gary Bret, Highland, Utah 84003 (US)
(74) Representative: Zacco Sweden AB
(86) International application number: PCT/US2018/034394
(87) International publication number: WO 2018/231491

(56) References cited:
- WO-A1-88/03357
- DE-A1- 3 127 051
- DE-A1- 3 127 051
- DE-A1- 3 906 578
- DE-A1- 3 906 578
- US-A- 943 634
- US-A- 943 634
- US-A- 2 790 548
- US-A- 2 790 548
- US-A- 5 758 477
- US-A- 5 758 477
- US-A1- 2002 195 459

## Description

### FIELD

The invention relates to a seeder head at a pre-determined rate.

### BACKGROUND

While crop growth technologies have advanced over the years, there are still many problems in the farming and crop industry today. As an example, while technological advances have increased efficiency and production of various crops, many factors may affect a harvest, such as weather, disease, infestation, and the like. Additionally, while the United States currently has suitable farmland to adequately provide food for the U.S. population, other countries and future populations may not have enough farmland to provide the appropriate amount of food. DE 31 27 051 A1 is disclosing a manually operated seeder comprising two seed hold arms.

### SUMMARY

Disclosed herein are precision seeder heads and seeder components that include precision seeder heads.

The invention is defined by claim 1, wherein preferred embodiments are based on the dependent claims 2 to 4.

It is to be understood that both the foregoing general description and the following detailed description are merely exemplary, and are intended to provide an overview or framework to understanding the nature and character of the claimed subject matter. The accompanying drawings are included to provide a further understanding and are incorporated in and constitute a part of this specification. The drawings illustrate one or more embodiment(s), and together with the description, serve to explain principles and operation of the various embodiments.

### BRIEF DESCRIPTION OF THE DRAWINGS

The embodiments set forth in the drawings are illustrative and exemplary in nature and not intended to limit the disclosure. The following detailed description of the illustrative embodiments can be understood when read in conjunction with the following drawings, where like structure is indicated with like reference numerals and in which:
FIG. 1 depicts a side schematic view of assembly line grow pod, according to embodiments described herein;
FIG. 2 depicts a side schematic view of a plurality of components for an assembly line grow pod, according to embodiments described herein;
FIG. 3 depicts a side schematic view of a seeder component for as assembly line grow pod, according to embodiments described herein;
FIG. 4A depicts a top view of a seed separator, according to embodiments described herein;
FIG. 4B depicts a side view of a seed separator partially covered by a cap, according to embodiments described herein;
FIG. 5 depicts a side view of the seed separator and a precision seeder head, according to one or more embodiments shown and described herein;
FIG. 6 depicts a side view of a precision seeder head in accordance with one or more embodiments shown and described herein;
FIGS. 7A through 7D depict side schematic views of a mechanism of seeding inside a precision seeder head in accordance with one or more embodiments shown and described herein; an
FIG. 8 depicts a computing device for an assembly line grow pod, according to embodiments described herein.

### DETAILED DESCRIPTION

Reference will now be made in detail to exemplary embodiments which are illustrated in the accompanying drawings. Whenever possible, the same reference numerals will be used throughout the drawings to refer to the same or like parts. The components in the drawings are not necessarily to scale, emphasis instead being placed upon illustrating the principles of the exemplary embodiments.

Numerical values, including endpoints of ranges, can be expressed herein as approximations preceded by the term "about," "approximately," or the like. In such cases, other embodiments include the particular numerical values. Regardless of whether a numerical value is expressed as an approximation, two embodiments are included in this disclosure: one expressed as an approximation, and another not expressed as an approximation. It will be further understood that an endpoint of each range is significant both in relation to another endpoint, and independently of another endpoint.

Directional terms as used herein - for example up, down, right, left, front, back, top, bottom - are made only with reference to the figures as drawn and are not intended to imply absolute orientation.

As will be discussed in greater detail below, embodiments disclosed herein include systems and methods for separating seeds in a grow pod. Some embodiments are configured with a seeder component including a seed separator. The seed separator includes a plate having a top surface and a bottom surface, a seed retaining wall attached to the top surface of the plate and configured to retain seeds within the seed retaining wall; a cap configured to partially cover the seed retaining wall, a vibrator attached to the bottom surface of the plate; and a seed injecting device attached to the bottom surface of the plate. The seed injecting device receives seeds within the seed retaining wall through one or more holes of the plate, and supplies the seeds to a seeder head at a predetermined rate through a tube connected between the seed injecting device and the seeder head. The systems and methods for separating seeds in a grow pod incorporating the same will be described in more detail below.

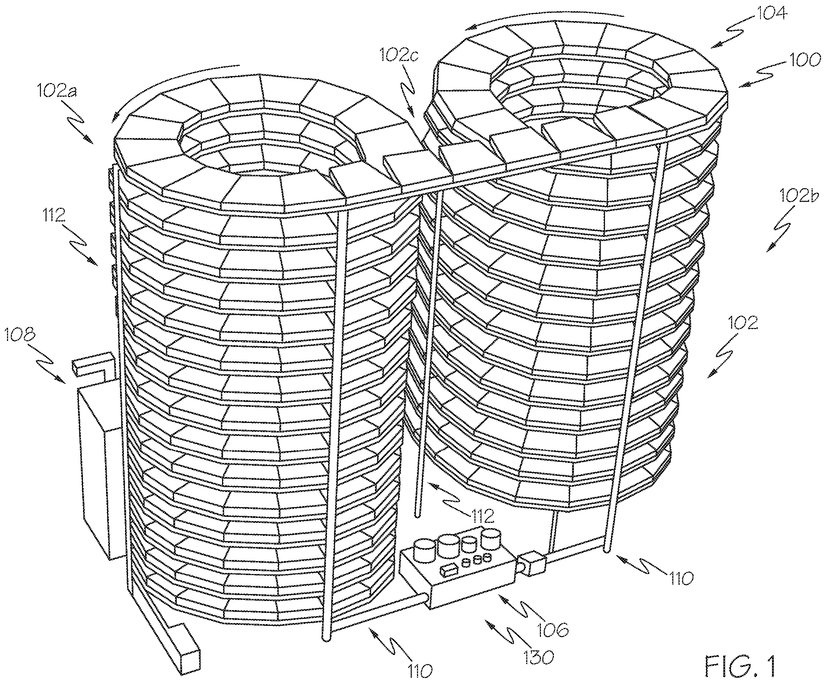

Referring now to the drawings, FIG. 1 depicts an assembly line grow pod 100, according to embodiments described herein. As illustrated, the assembly line grow pod 100 may include a track 102 that holds one or more carts 104. The track 102 may include an ascending portion 102a, a descending portion 102b, and a connection portion 102c. The track 102 may wrap around (in a counterclockwise direction in FIG. 1) a first axis such that the carts 104 ascend upward in a vertical direction. The connection portion 102c may be relatively level (although this is not a requirement and is utilized to transfer carts 104 to the descending portion 102b. The descending portion 102b may be spiraled around a second axis (again in a counterclockwise direction in FIG. 1) that is substantially parallel to the first axis, such that the carts 104 may be returned closer to ground level.

While not explicitly illustrated in FIG. 1, the assembly line grow pod 100 may also include a plurality of lighting devices, such as light emitting diodes (LEDs). The lighting devices may be disposed on the track 102 opposite the carts 104, such that the lighting devices direct light waves to the carts 104 on the portion the track 102 directly below. In some embodiments, the lighting devices are configured to create a plurality of different colors and/or wavelengths of light, depending on the application, the type of plant being grown, and/or other factors. While in some embodiments, LEDs are utilized for this purpose, this is not a requirement. Any lighting device that produces low heat and provides the desired functionality may be utilized.

Also depicted in FIG. 1 is a master controller 106. The master controller 106 may include a computing device and/or other hardware for controlling various components of the assembly line grow pod 100. As an example, a water distribution component, a nutrient distribution component, an air distribution component, etc. may be included as part of the master controller 106.

Coupled to the master controller 106 is a seeder component 108. The seeder component 108 may be configured to seed one or more carts 104 as the carts 104 pass the seeder in the assembly line. Depending on the particular embodiment, each cart 104 may include a single section tray for receiving a plurality of seeds. Some embodiments may include a multiple section tray for receiving individual seeds in each section (or cell). In the embodiments with a single section tray, the seeder component 108 may detect presence of the respective cart 104 and may begin laying seed across an area of the single section tray. The seed may be laid out according to a desired depth of seed, a desired number of seeds, a desired surface area of seeds, and/or according to other criteria. In some embodiments, the seeds may be pre-treated with nutrients and/or anti-buoyancy agents (such as water) as these embodiments may not utilize soil to grow the seeds and thus might need to be submerged.

In the embodiments where a multiple section tray is utilized with one or more of the carts 104, the seeder component 108 may be configured to individually insert seeds into one or more of the sections of the tray. Again, the seeds may be distributed on the tray (or into individual cells) according to a desired number of seeds, a desired area the seeds should cover, a desired depth of seeds, etc.

The watering component may be coupled to one or more water lines 110, which distribute water and/or nutrients to one or more trays at predetermined areas of the assembly line grow pod 100. In some embodiments, seeds may be sprayed to reduce buoyancy and then flooded. Additionally, water usage and consumption may be monitored, such that at subsequent watering stations, this data may be utilized to determine an amount of water to apply to a seed at that time.

Also depicted in FIG. 1 are airflow lines 112. Specifically, the master controller 106 may include and/or be coupled to one or more components that delivers airflow for temperature control, pressure, carbon dioxide control, oxygen control, nitrogen control, etc. Accordingly, the airflow lines 112 may distribute the airflow at predetermined areas in the assembly line grow pod 100.

It should be understood that while the embodiment of FIG. 1 depicts an assembly line grow pod 100 that wraps around a plurality of axes, this is merely one example. Any configuration of assembly line or stationary grow pod may be utilized for performing the functionality described herein.

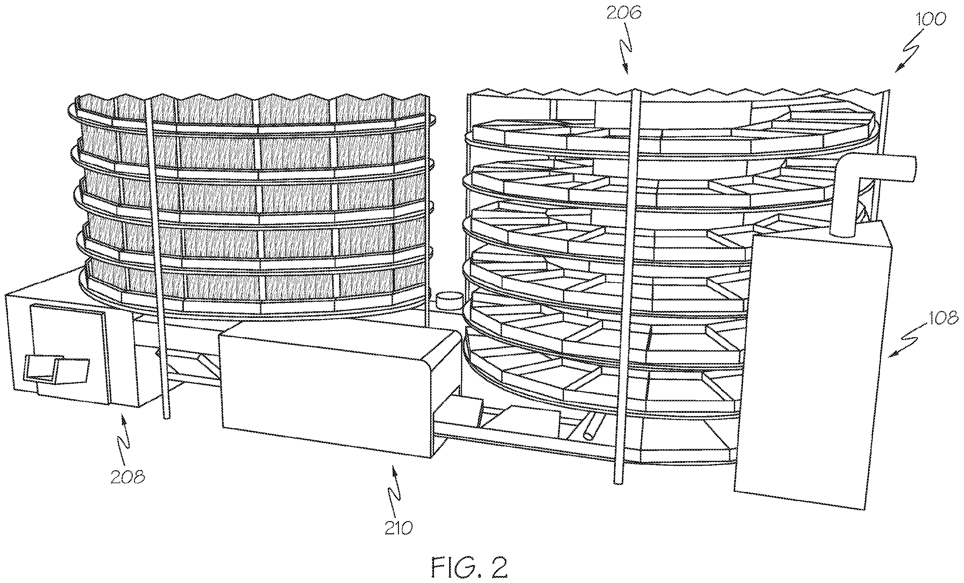

FIG. 2 depicts a plurality of components for an assembly line grow pod 100, according to embodiments described herein. The seeder component 108 is illustrated, as well as a lighting device 206, a harvester component 208, and a sanitizer component 210. As described above, the seeder component 108 may be configured to seed the trays of the carts 104. The lighting devices 206 may provide light waves that may facilitate plant growth. Additionally, as the plants are lighted, watered, and provided nutrients, the carts 104 will traverse the track 102 of the assembly line grow pod 100. Additionally, the assembly line grow pod 100 may detect a growth and/or fruit output of a plant and may determine when harvesting is warranted. If harvesting is warranted prior to the cart 104 reaching the harvester, modifications to a recipe may be made for that particular cart 104 until the cart 104 reaches the harvester.

Conversely, if a cart 104 reaches the harvester and it has been determined that the plants in that cart 104 are not ready for harvesting, the assembly line grow pod 100 may commission that cart 104 for another lap. This additional lap may include a different dosing of light, water, nutrients, etc. and the speed of the cart could change, based on the development of the plants on the cart. If it is determined that the plants on a cart 104 are ready for harvesting, the harvester component 208 may facilitate that process.

In some embodiments, the harvester component 208 may simply cut the plants at a predetermined height for harvesting. In some embodiments, the tray may be overturned to remove the plants from the tray and into a processing container for chopping, mashing, juicing, etc. Because many embodiments of the assembly line grow pod 100 do not use soil, minimal (or no) washing of the plants may be necessary prior to processing.

Similarly, some embodiments may be configured to automatically separate fruit from the plant, such as via shaking, combing, etc. If the remaining plant material may be reused to grow additional fruit, the cart 104 may keep the remaining plant and return to the growing portion of the assembly line. If the plant material is not to be reused to grow additional fruit, it may be discarded or processed, as appropriate.

Once the cart 104 and tray are clear of plant material, the sanitizer component 210 may be implemented to remove any particulate, plant material, etc. that may remain on the cart 104. As such, the sanitizer component 210 may implement any of a plurality of different washing mechanisms, such as high pressure water, high temperature water, and/or other solutions for cleaning the cart 104 and/or tray. In some embodiments, the tray may be overturned to output the plant for processing and the tray may remain in this position. As such, the sanitizer component 210 may receive the tray in this position, which may wash the cart 104 and/or tray and return the tray back to the growing position. Once the cart 104 and/or tray are cleaned, the tray may again pass the seeder, which will determine that the tray requires seeding and will begin the process of seeding.

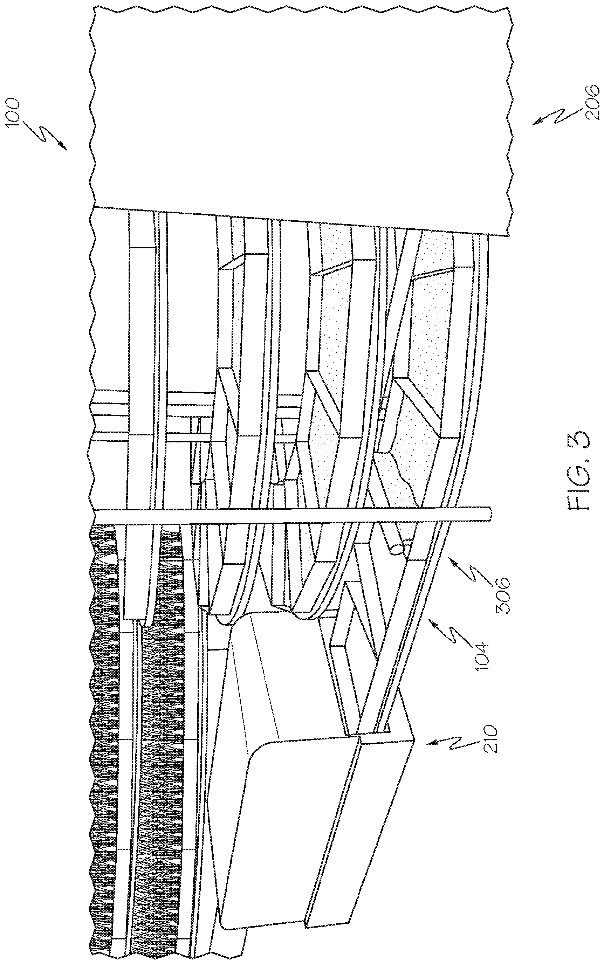

FIG. 3 depicts a seeder component 108 for as assembly line grow pod 100, according to embodiments described herein. As illustrated, the sanitizer component 210 may return the tray to the growing position, which is substantially parallel to ground. The seeder component 108 includes a seeder head 306 that facilitates seeding of the tray as the cart 104 passes. It should be understood that while the seeder head 306 is depicted in FIG. 3 as an arm that spreads a layer of seed across a width of the tray, this is merely an example. Some embodiments may be configured with a precision seeder head that is capable of placing individual seeds in a desired location. The precision seeder head receives seeds from a seed separator. The details of the precision seeder head and the seed separator will be described below. Such embodiments may be utilized in a multiple section tray with a plurality of cells, where one or more seeds may be individually placed in the cells.

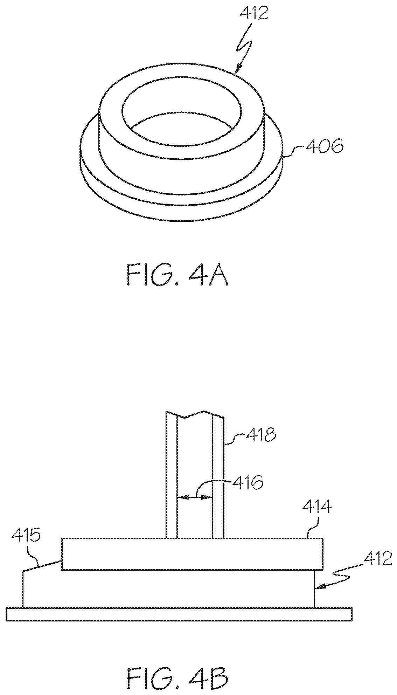

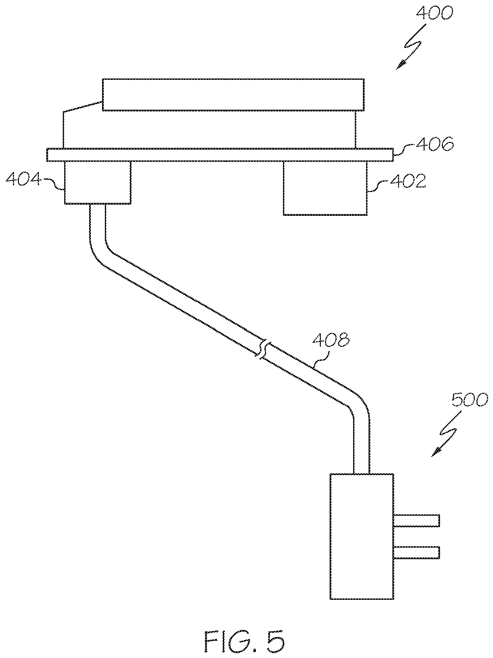

FIG. 4A depicts a top view of a seed separator 400, according to embodiments described herein. The seed separator 400 includes a plate 406 and a seed retaining wall 412. The plate 406 has a top surface and a bottom surface. The seed retaining wall 412 receives seeds provided from a seed container. In embodiments, the plate 406 may be a circle-shaped plate (this is not a requirement), and the seed retaining wall 412 may be a rounded wall that is configured to retain seeds inside the wall, The seed retaining wall 412 may be attached to the top surface of the plate 406. The plate 406 may include one or more holes through which seeds on the top surface of the plate 406 may pass to the bottom surface of the seed separator 400, and may be received by a seed injecting device which will be described with reference to FIG. 5.

As illustrated in FIG. 4B, the seed retaining wall 412 may be partially covered by a cap 414. The seed retaining wall 412 and the cap 414 may define an interior volume 415 in which seed is contained. In some embodiments, the interior volume 415 may be open to the surrounding environment. The cap 414 includes a protruded cylindrical element 416 that is coupled to a seed ingestion tube 418. The protruded cylindrical element 416 is configured to receive seeds that are delivered through the seed ingestion tube 418 from a seed tank. The seeds that are delivered through the seed ingestion tube 418 pass through the protruded cylindrical element 416 and are retained inside interior volume 415 as defined by the seed retaining wall 412.

FIG. 5 depicts a side view of the seed separator 400 and a precision seeder head 500, according to one or more embodiments shown and described herein. The seed separator 400 includes a seed injecting device 404 and a vibrator 402. The seed injecting device 404 and the vibrator 402 may be attached to the bottom of the plate 406. The vibrator 402 is configured to vibrate the seed separator 400 such that seeds retained within the seed retaining wall 412 on the top surface of the seed separator 400 may be supplied to the seed injecting device 404 through one or more holes of the plate 406. The seed injecting device 404 is connected with a communicating tube 408. The communicating tube 408 may be an elongated tube having two ends: one end is connected with the seed injecting device, and the other end is connected with the precision seeder head 500.

The seed injecting device 404 supplies one or more seeds at a time to the precision seeder head 500 through the communicating tube 408. In embodiments, the seed injecting device 404 blows one or more seeds at a time through the communicating tube 408. In some embodiments, the seed injecting device 404 physically pushes or hits one or more seeds at a time such that the seeds can pass through the communicating tube 408. The seed injecting device 404 may supply seeds to the precision seeder head 500 at a certain rate. The rate of supply to the precision seeder head 500 may be determined based on the rate that the precision seeder head 500 seeds a tray. For example, if the precision seeder head 500 places three seeds per second on the tray, the seed injecting device 404 also supplies three seeds per second to the precision seeder head 500. In some embodiments, the seed injecting device 404 supplies seeds at a certain rate such that a certain number of seeds are queued in single file in the communicating tube 408 at the side of the precision seeder head 500. For example, the seed injecting device 404 supplies seeds at a certain rate such that at least five seeds are queued in the communicating tube 408 at the side of precision seeder head 500. The seed separator 400 not only smoothly supplies seeds to the precision seeder head 500 but also regulates the rate of supply to prevent overflow of seeds or shortage of seeds provided to the precision seeder head 500. In some embodiments, the seed injecting device 404 delivers seed to the precision seeder head 500 at a rate that is greater than or equal to the rate that the precision seeder head 505 dispenses seed. In some embodiments, the seed injecting device 404 delivers seed to the precision seeder head 500 at a rate that is within about 10% of the rate that the precision seeder head 505 dispenses seed. In some embodiments, the seed injecting device 404 interrupts delivery of seed to the precision seeder head 500 when the precision seeder head 505 is not dispensing seed.

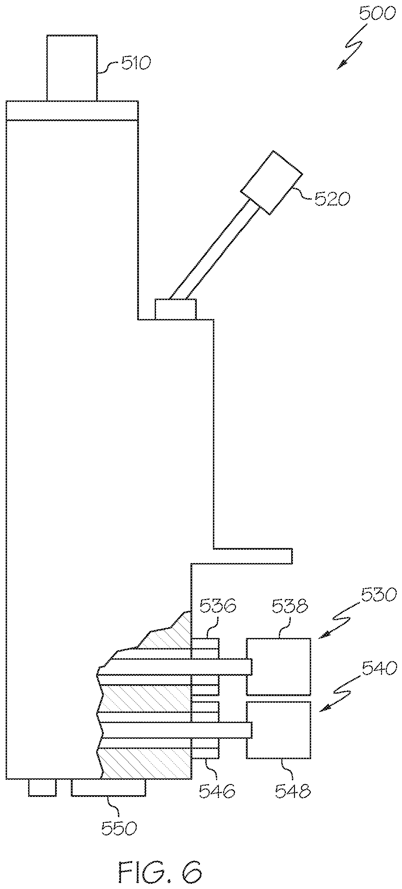

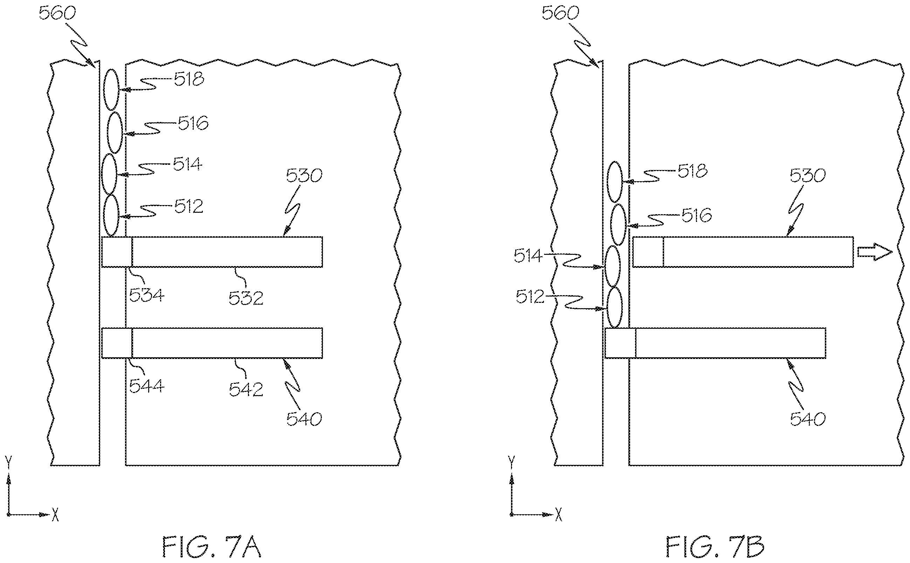

FIG. 6 depicts a side view of a precision seeder head 500 in accordance with one or more embodiments shown and described herein. The precision seeder head 500 includes a seed entry 510, a vibrator 520, a first seed hold 530, a second seed hold 540, an optical sensor 550. The seed entry 510 receives seeds from the seed separator 400 through the communicating tube 408. The seed entry 510 is connected to an internal tube that passes through inside the precision seeder head 500. The tube may be blocked by the first seed hold 530 and/or the second seed hold 540, which will be described in detail with reference to FIGS. 7A through 7D below. A first spring 536 may apply a force that tends to position the first seed hold 530 in a default position. A first motor or actuator 538 may selectively apply a force that overcomes the force of the first spring 536 and moves the first seed hold 530 to a release position. Similarly, a second spring 546 may apply a force that tends to position the second seed hold 540 in a default position. A second motor or actuator 548 may selectively apply a force that overcomes the force of the second spring 546 and moves the second seed hold 540 to a release position. The vibrator 520 is configured to vibrate the precision seeder head 500 in order to release seeds stuck in the tube. The first seed hold 530 and the second seed hold 540 may be composed of any elongated material that is moveable substantially perpendicular to the tube. The first seed hold 530 and the second seed hold 540 may block seeds in the tube from falling down to a tray. The detailed operation of the first seed hold 530 and the second seed hold 540 is described with reference to FIGS. 7A through 7D below. The optical sensor 550 detects seeds falling down to a tray from the tube. The optical sensor 550 communicates the detected seed falling event to the master controller 106.

FIGS. 7A through 7D depict mechanism of seeding inside the precision seeder head 500 in accordance with one or more embodiments shown and described herein. The precision seeder head 500 includes a seed queue tube 560 along which a plurality of seeds, e.g., seeds 512, 514, 516, and 518 pass through. The seed queue tube 560 may have an inside circumference that is sized to accommodate one seed at any vertical location along the seed queue tube 560. The seed queue tube 560 may include two holes that are configured to receive a first seed hold 530 and a second seed hold 540 that is positioned at a vertical position below the first seed hold 530. The first seed hold 530 is a shaft portion 532 that may be in one of two different positions: a default position and a release position. When the first seed hold 530 is in the default position, it pushes against the inner wall of the seed queue tube 560 or a seed in the seed queue tube 560 by an elastic force, e.g., by a force applied by one or more springs against the first seed hold 530. In FIG. 7A, the first seed hold 530 blocks the seed queue tube 560 and upholds the seeds 512, 514, 516, and 518 from falling toward -y direction. The second seed hold 540 is also a shaft portion 542 that may be in two different positions: a default position and a release position. In FIG. 7A, the second seed hold 540 is in the default position pushing against the inner wall of the seed queue tube 560. In some embodiments, the first seed hold 530 and/or the second seed hold 540 may include an elastomeric tip 534, 544 that is coupled to the respective shaft portion 532, 542. The elastomeric tip 534, 544 may have a lower modulus of elasticity than the respective shaft portion 532, 542, such that the elastomeric tip 534, 544 is more compliant than the shaft portion 532, 542 and is able to elastically deform to contact the seed or the inner wall of the seed queue tube 560.

In FIG. 7B, the first seed hold 530 moves to the release position by a force applied in an opposite direction to the direction of the elastic force (e.g., +x direction). For example, a motor or actuator may push or pull the first seed hold 530 to overcome the elastic force and moves the first seed hold 530 away from the seed queue tube 560. As the first seed hold 530 is moved to the release position, the seed queue tube 560 at the first seed hold 530 is unblocked and the seeds 512, 514, 516, and 518 fall toward -y direction due to gravity. The second seed hold 540 blocks the seed queue tube 560 and upholds the seeds 512, 514, 516, and 518.

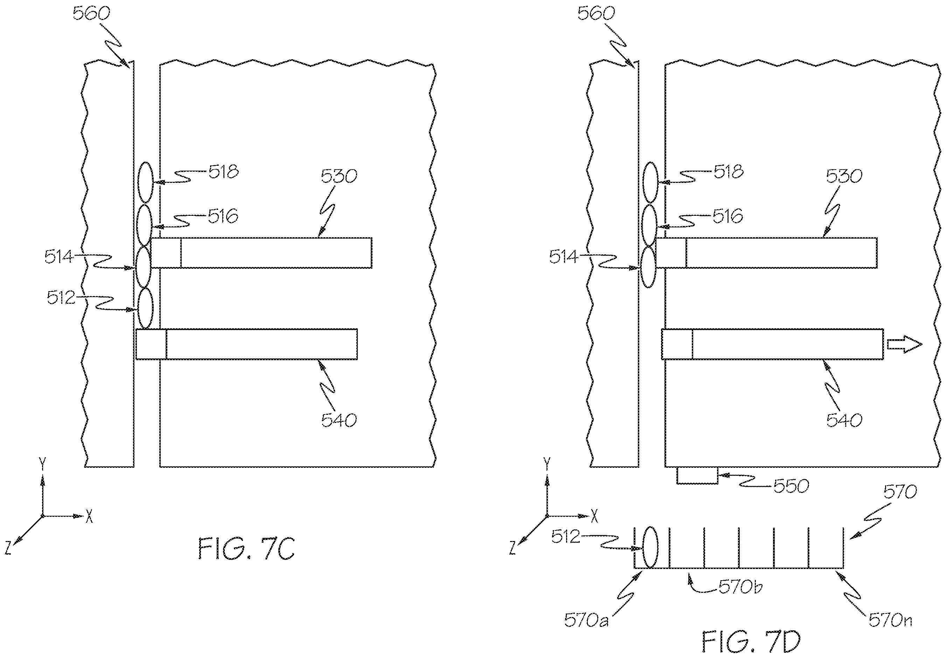

In FIG. 7C, the first seed hold 530 moves back to the default position by an external force, e.g., the elastic force pushing or pulling the first seed hold 530 toward -x direction. The first seed hold 530 pushes the seed 514 against the inner wall of the seed queue tube 560 such that the seed 514 is securely fixed inside the seed queue tube 560. The seed 512 is upheld by the second seed hold 540.

In FIG. 7D, the second seed hold 540 moves to the release position by a force applied in an opposite direction to the direction of the elastic force (e.g., +x direction) that overcomes the elastic force and moves the second seed hold to the release position. The seed 512 falls down to a bed seed holder 570 in response to the second seed hold 540 being moved to the release position that unblocks the seed queue tube 560. The bed seed holder 570 includes a plurality of cells, and the seed 512 falls into one of the plurality of cells. The seed 514 is securely fixed between the inner wall of the seed queue tube 560 and the first seed hold 530. Accordingly, the seeds 516 and 518 are also upheld by the first seed hold 530. The optical sensor 550 detects the seed 512 that is dispensed from the seed queue tube 560 and falls down to a first cell 570a of the bed seed holder 570. The optical sensor 550 may capture the seed 512 in the first cell 570a, or capture the seed 512 as it exits the seed queue tube 560 and falls into the first cell. Once the optical sensor 550 detects the seed 512 is falling, the second seed hold 540 is returned to the default position.

Although FIGS. 7A through 7D depict one seed being deposited on a cell of the bed seed holder 570 at a time, more than one seed may be deposited on a cell of the bed seed holder 570 at a time. For example, instead of one seed being upheld by the second seed hold 540 in FIG. 7C, two seeds may be upheld by the second seed hold 540, and they fall down together into one cell of the bed seed holder 570 when the second seed hold 540 is released.

In some embodiments, the spacing between the first seed hold 530 and the second seed hold 540 may be adjusted based on the size of a seed. For example, the spacing between the first seed hold 530 and the second seed hold 540 may be adjusted to a nominal length of the seed type. Thus, the spacing may become greater for a seed type having a relatively long nominal length, whereas the spacing may become smaller for a seed type having a relatively short nominal length. In some embodiments, the spacing between the first seed hold 530 and the second seed hold 540 may be adjusted based on the size of a seed type and the number of seeds being deposited at a time. For example, if three seeds need to be deposited into one cell of the bed seed holder 570, the spacing may be set as three times the nominal length of the seed type such that the first bottom three seeds may be upheld by the second seed hold 540 while the fourth seed from the bottom may be securely fixed by the first seed hold 530. In some embodiments, the duration of time that the first seed hold 530 and the second seed hold 540 are maintained in the release position and the timing of moving the first seed hold 530 and the second seed hold 540 between the release position and the default position may allow for the desired number of seeds greater than a quantity of one to be dispensed from the seed queue tube 560. For example, the first seed hold 530 may be selectively controlled to move to the default position prior to second seed hold 540 being selectively controlled to move to the default position such that seeds that are present between the first seed hold 530 and the second seed hold 540 may be cleared from the seed queue tube 560.

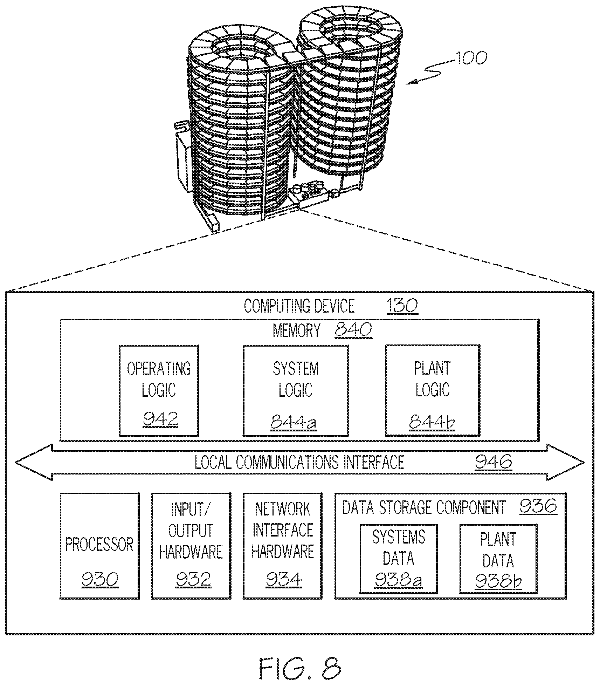

FIG. 8 depicts a computing device 130 for an assembly line grow pod 100, according to embodiments described herein. As illustrated, the computing device 130 includes a processor 930, input/output hardware 932, the network interface hardware 934, a data storage component 936 (which stores systems data 938a, plant data 938b, and/or other data), and the memory component 840. The memory component 840 may be configured a volatile and/or nonvolatile memory and as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the computing device 130 and/or external to the computing device 130.

The memory component 840 may store operating logic 942, the systems logic 844a, and the plant logic 844b. The systems logic 844a and the plant logic 844b may each include a plurality of different pieces of logic, each of which may be embodied as a computer program, firmware, and/or hardware, as an example. A local interface 946 is also included in FIG. 8 and may be implemented as a bus or other communication interface to facilitate communication among the components of the computing device 130.

The processor 930 may include any processing component operable to receive and execute instructions (such as from a data storage component 936 and/or the memory component 840). The input/output hardware 932 may include and/or be configured to interface with microphones, speakers, a display, and/or other hardware.

The network interface hardware 934 may include and/or be configured for communicating with any wired or wireless networking hardware, including an antenna, a modem, LAN port, wireless fidelity (Wi-Fi) card, WiMax card, ZigBee card, Bluetooth chip, USB card, mobile communications hardware, and/or other hardware for communicating with other networks and/or devices. From this connection, communication may be facilitated between the computing device 130 and other computing devices, such as the user computing device 852 and/or remote computing device 854.

The operating logic 942 may include an operating system and/or other software for managing components of the computing device 130. As also discussed above, systems logic 844a and the plant logic 844b may reside in the memory component 840 and may be configured to perform the functionality, as described herein.

It should be understood that while the components in FIG. 8 are illustrated as residing within the computing device 130, this is merely an example. In some embodiments, one or more of the components may reside external to the computing device 130. It should also be understood that, while the computing device 130 is illustrated as a single device, this is also merely an example. In some embodiments, the systems logic 844a and the plant logic 844b may reside on different computing devices. As an example, one or more of the functionalities and/or components described herein may be provided by the user computing device 852 and/or remote computing device 854.

Additionally, while the computing device 130 is illustrated with the systems logic 844a and the plant logic 844b as separate logical components, this is also an example. In some embodiments, a single piece of logic (and/or or several linked modules) may cause the computing device 130 to provide the described functionality.

As illustrated above, various embodiments for separating seeds in a grow pod are disclosed. These embodiments create a quick growing, small footprint, chemical free, low labor solution to growing microgreens and other plants for harvesting. These embodiments may create recipes and/or receive recipes that dictate the timing and wavelength of light, pressure, temperature, watering, nutrients, molecular atmosphere, and/or other variables the optimize plant growth and output. The recipe may be implemented strictly and/or modified based on results of a particular plant, tray, or crop.

Accordingly, some embodiments may include a seeder component including a seed separator. The seed separator includes a plate having a top surface and a bottom surface, a seed retaining wall attached to the top surface of the plate and configured to retain seeds within the seed retaining wall; a cap configured to partially cover the seed retaining wall; a vibrator attached to the bottom surface of the plate; and a seed injecting device attached to the bottom surface of the plate, wherein the seed injecting device is configured to receive seeds within the seed retaining wall through one or more holes of the plate, and supply the seeds to a seeder head at a predetermined rate through a tube connected between the seed injecting device and the seeder head.

While particular embodiments and aspects of the present disclosure have been illustrated and described herein, various other changes and modifications can be made without departing from the scope of the disclosure. Moreover, although various aspects have been described herein, such aspects need not be utilized in the scope of the invention is limited by the appended claims.

It should now be understood that embodiments disclosed herein includes precision seeder head and seeder components that include precision seeder heads. The precision seeder heads limit the number of seeds that are dispensed to a cell, thereby reducing waste of seed. The seeder component provides delivery of seed to the precision seeder head in a single file queue so that the desired quantity of seeds can be dispensed by the precision seeder head.

## Claims

1. A precision seeder head (500) comprising:
a seed queue tube (560) having an inside circumference that is sized to accommodate one seed at any vertical location;
a first seed hold (530) that selectively blocks the seed queue tube when located in a default position and selectively unblocks the seed queue tube when located in a release position;
a second seed hold (540) that is positioned at a vertical position below the first seed hold and that selectively blocks the seed queue tube when located in a default position and selectively unblocks the seed queue tube when located in a release position; **characterized in that** the precision seeder head comprises
an optical sensor (550) positioned at a vertical position below the first seed hold, the optical sensor adapted to detect seeds dispensed from the seed queue tube, and
a controller (106), wherein the optical sensor is arranged to communicate the detected seed falling event to the controller,
wherein a quantity of seeds dispensed from the seed queue tube is adjusted based on a duration and relative timing of the first seed hold and the second seed hold being maintained in their respective release positions.

2. The precision seeder head of claim 1, further comprising:
a first spring (536) that applies a force to the first seed hold in a direction that selectively blocks the seed queue tube;
a first actuator (538) that applies a force to the first seed hold in a direction that selectively overcomes the force of the first spring and unblocks the seed queue tube;
a second spring (546) that applies a force to the second seed hold in a direction that selectively blocks the seed queue tube; and
a second actuator (548) that applies a force to the second seed hold in a direction that selectively overcomes the force of the second spring and unblocks the seed queue tube.

3. The precision seeder head of claim 2, wherein when the first seed hold is in the default position and the second actuator is in the release position, at least one seed that is positioned between the first seed hold and the second seed hold and not contacted by the first seed hold is dispensed from the seed queue tube.

4. The precision seeder head of claim 1, wherein a spacing between the first seed hold and the second seed hold is greater than a nominal length of a seed type and smaller than twice the nominal length of the seed type.

## Patentansprüche

1. Präzisionssämaschinenkopf (500) umfassend:
ein Samenschlangenrohr (560) mit einem inneren Umfang, der dimensioniert ist, um einen Samen in irgendeiner vertikaler Lage aufzunehmen;
einen ersten Samenraum (530), der das Samenschlangenrohr in einer Standardposition selektiv blockiert und das Samenschlangenrohr in einer Freigabeposition selektiv freigibt;
einen zweiten Samenraum (540), der in einer vertikalen Position unterhalb des ersten Samenraums positioniert ist und das Samenschlangenrohr in einer Standardposition selektiv blockiert und das Samenschlangenrohr in einer Freigabeposition selektiv freigibt; **dadurch gekennzeichnet, dass** der Präzisionssämaschinenkopf Folgendes umfasst
einen optischen Sensor (550), der in einer vertikalen Position unterhalb des ersten Samenraums positioniert ist, wobei der optische Sensor, dafür eingerichtet ist, Samen zu detektieren, die vom Samenschlangenrohr abgegeben werden, und
eine Steuerung (106), wobei der optische Sensor dafür eingerichtet ist, das Fallen des detektierten Samens an die Steuerung zu kommunizieren,
wobei eine Menge an Samen, die vom Samenschlangenrohr abgegeben werden, basierend auf einer Dauer und relativem Timing des Aufrechterhaltens des ersten Samenraums und des zweiten Samenraums in ihren jeweiligen Freigabepositionen eingestellt wird.

2. Präzisionssämaschinenkopf nach Anspruch 1, weiter umfassend:
eine erste Feder (536), die eine Kraft auf den ersten Samenraum in eine Richtung ausübt, die das Samenschlangenrohr selektiv blockiert;
einen ersten Aktuator (538), der eine Kraft auf den ersten Samenraum in eine Richtung ausübt, die die Kraft der ersten Feder überwindet und das Samenschlangenrohr freigibt;
eine zweite Feder (546), die eine Kraft auf den zweiten Samenraum in eine Richtung ausübt, die das Samenschlangenrohr selektiv blockiert; und
einen zweiten Aktuator (548), der eine Kraft auf den zweiten Samenraum in eine Richtung ausübt, die die Kraft der zweiten Feder überwindet und das Samenschlangenrohr freigibt.

3. Präzisionssämaschinenkopf nach Anspruch 2, wobei, wenn der erste Samenraum in der Standardposition ist und der zweite Aktuator in der Freigabeposition ist, mindestens ein Samen, der zwischen dem ersten Samenraum und dem zweiten Samenraum positioniert ist und durch den ersten Samenraum nicht kontaktiert wird, vom Samenschlangenrohr abgegeben wird.

4. Präzisionssämaschinenkopf nach Anspruch 1, wobei ein Zwischenraum zwischen dem ersten Samenraum und dem zweiten Samenraum größer als eine nominelle Länge eines Samentypens und kleiner als zweimal der nominellen Länge des Samentypens ist.

## Revendications

1. Tête de semoir de précision (500) comprenant :
un tube de queue de graines (560) ayant une circonférence intérieure qui est dimensionnée pour recevoir une graine à n'importe quel emplacement vertical ;
une première prise de graines (530) qui bloque sélectivement le tube de queue de graines lorsqu'il est situé dans une position par défaut et débloque sélectivement le tube de queue de graines lorsqu'il est situé dans la position de libération ;
une deuxième prise de graines (540) qui est positionnée au niveau d'une position verticale au-dessous de la première prise de graines et qui bloque sélectivement le tube de queue de graines lorsqu'il est situé dans une position par défaut et débloque sélectivement le tube de queue de graines lorsqu'il est situé dans la position de libération ; **caractérisée en ce que** la tête de semoir de précision comprend
un capteur optique (550) positionné au niveau d'une position verticale au-dessous de la première prise de graines, le capteur optique étant adapté pour détecter des graines distribuées depuis le tube de queue de graines, et
un dispositif de commande (106), le capteur optique étant agencé pour communiquer l'événement de chute de graines détecté au dispositif de commande,
dans laquelle une quantité de graines distribuées depuis le tube de queue de graines est réglée sur la base d'une durée et d'une synchronisation relative de la première prise de graines et de la deuxième prise de graines étant maintenues chacune dans leurs positions de libération.

2. Tête de semoir de précision selon la revendication 1, comprenant en outre :
un premier ressort (536) qui applique une force à la première prise de graines dans une direction qui bloque sélectivement le tube de queue de graines ;
un premier actionneur (538) qui applique une force à la première prise de graines dans une direction qui surmonte sélectivement la force du premier ressort et débloque le tube de queue de graines ;
un deuxième ressort (546) qui applique une force à la deuxième prise de graines dans une direction qui bloque sélectivement le tube de queue de graines ; et
un deuxième actionneur (548) qui applique une force à la deuxième prise de graines dans une direction qui surmonte sélectivement la force du deuxième ressort et débloque le tube de queue de graines.

3. Tête de semoir de précision selon la revendication 2, dans laquelle lorsque la première prise de graines est dans la position par défaut et le deuxième actionneur est dans la position de libération, au moins une graine qui est positionnée entre la première prise de graines et la deuxième prise de graines et n'est pas en contact par la première prise de graines est distribuée à partir du tube de queue de graines.

4. Tête de semoir de précision selon la revendication 1, dans laquelle un espacement entre la première prise de graines et la deuxième prise de graine est supérieur à une longueur nominale d'un type de graine et inférieur au double de la longueur nominale du type de graine.
